# EUROPÄISCHE PATENTSCHRIFT

(11) **EP 1 560 393 B1**
(45) Veröffentlichungstag und Bekanntmachung des Hinweises auf die Patenterteilung: **01.05.2013**
(21) Anmeldenummer: 04106363.7
(22) Anmeldetag: 07.12.2004
(51) Int. Cl.: H04L 29/06, H04M 7/00

(54) **Vorrichtungen und Verfahren zum Überprüfen einer Anfrage-Nachricht auf Authentizität und Autorisierung**
Apparatuses and method for verifying a request message for authenticity and authorization
Dispositifs and méthode pour la vérification de l'authenticité et de l'autorisation d'un message de demande

(30) Priorität: 27.01.2004 DE 102004004048
(43) Veröffentlichungstag der Anmeldung: 03.08.2005
(60) Teilanmeldung: 10008062.1
(73) Patentinhaber: Siemens Aktiengesellschaft, 80333 München (DE)
(72) Erfinder: Busser, Jens-Uwe, 81739 München (DE); Böhm, Markus, 81379 München (DE); Fries, Steffen, 85598 Baldham (DE); Klasen, Wolfgang, 85521 Ottobrunn (DE)

(56) Entgegenhaltungen:
- EP-A- 1 267 548
- US-A1- 2003 169 859
- J. ROSENBERG; H. SCHULZRINNE; G. CAMARILLO; A. JOHNSTON; J. PETERSON; R. SPARKS; M. HANDLEY; E. SCHOOLER: "RFC 3261 - SIP: Session Initiation Protocol" IETF REQUEST FOR COMMENTS, Juni 2002 (2002-06), Seiten 1-269, XP015009039
- P. SRISURESH; J. KUTHAN; J. ROSENBERG; A. MOLITOR; A. RAYHAN: "RFC 3303 - Middlebox communication architecture and framework" IETF REQUEST FOR COMMENTS, August 2002 (2002-08), Seiten 1-34, XP015009080
- ITU-T SG16: "H.235 - Security and encryption for H-series (H.323 and other H.245-based) multimedia terminals (H.235v3)" ITU-T RECOMMENDATION, [Online] August 2003 (2003-08), Seiten 1-118, XP002325059 Gefunden im Internet: URL:www.itu.int/itu-t> [gefunden am 2005-04-18]
- ITU-T SG16 Q11: "PACKET-BASED MULTIMEDIA COMMUNICATIONS SYSTEMS" ITU-T H.323, November 2000 (2000-11), Seiten 1-257, XP002226856

## Beschreibung

Die Erfindung betrifft ein Kommunikationssystem, das als Kommunikationselemente einen Verbindungssteuerungs-Rechner, einen mit dem Verbindungssteuerungs-Rechner gekoppelten Netzwerkverbindungs-Rechner und zumindest eine mit dem Netzwerkverbindungs-Rechner gekoppelte Kommunikationseinheit aufweist. Die Erfindung betrifft weiterhin ein Verfahren zum Anmelden einer Kommunikationsbeziehung in einem solchen Kommunikationssystem sowie einen Netzwerkverbindungs-Rechner.

In ITU-Standard H.235 (veröffentlicht in ITU-T Recommendation H.235 Version 3 "Security and Encryption for H-Series (H.323 and other H.245 based) Multimedia-Terminals") sind Sicherheitsmechanismen für eine paketorientierte Netzwerkkommunikation definiert. Integrität und Authentizität der Registrierungs- und Signalisierungsdaten werden dabei u.a. durch kryptographische Checksummen unter Einbeziehung eines gemeinsamen Geheimnisses sichergestellt. Tritt bei der Überprüfung einer kryptographischen Checksumme ein Fehler auf, so werden die Nachrichten, die auch Adressinformationen enthalten, verworfen.

Im sog. "Baseline-Profil" nach H.235 Annex D authentifizieren sich eine Kommunikationseinheit und ein Verbindungssteuerungs-Rechner, der auch als Gatekeeper bezeichnet wird, mittels eines Passwortes, welches vorher administriert wurde. Im sog. "hybriden-Profil" gemäß H.235 Annex F verwenden die Kommunikationseinheit und der Verbindungssteuerungs-Rechner bei der Anmeldung bzw. Registrierung digitale Signaturen und Zertifikate. Zum Integritätsschutz der nach erfolgreicher Anmeldung folgenden weiteren Nachrichten wird während der Anmeldeprozedur ein gemeinsames Geheimnis mit dem Diffie-Hellman-Verfahren dynamisch ausgehandelt.

In einem Kommunikationssystem, das einen Verbindungssteuerungs-Rechner, einen Netzwerkverbindungs-Rechner und zumindest eine Kommunikationseinheit aufweist, wird die Authentifikation und Autorisierung der Kommunikationseinheit in der Regel durch den Verbindungssteuerungs-Rechner durchgeführt, während die Netzwerkverbindungs-Rechner, auch als Gateway bekannt, die Nachrichten ohne Änderungen von der Kommunikationseinheit zu dem Verbindungssteuerungs-Rechner durchleiten.

Probleme ergeben sich dann, wenn sich die Kommunikationseinheit und der Verbindungssteuerungs-Rechner in unterschiedlichen Kommunikationsnetzen mit inkompatiblen IP-Adressbereichen befinden. In diesem Fall erfolgt eine Umsetzung der IP-Adresse in den Nachrichten mittels der sog. Network Address Translation (NAT) durch den Netzwerkverbindungs-Rechner, der die Verbindung zwischen den beiden Kommunikationsnetzen herstellt. Aufgrund der Umsetzung der IP-Adresse stimmt die kryptographische Checksumme der geänderten Nachricht nicht mehr, weswegen sie von dem Verbindungssteuerungs-Rechner verworfen wird. Um dies zu vermeiden, muss auch die Checksumme durch den Netzwerkverbindungs-Rechner ersetzt werden, wozu dieser das gemeinsame Geheimnis der Kommunikationseinheit und des Verbindungssteuerungs-Rechners benötigen würde.

In der beschriebenen Situation müsste den Netzwerkverbindungs-Rechnern Zugriff auf eine Datenbank, die mit dem Verbindungssteuerungs-Rechner zur Überprüfung der Autorisation verbunden ist, gegeben werden, so dass bei der Umsetzung der IP-Adresse eine neue, korrekte Checksumme von dem Netzwerkverbindungs-Rechner berechnet werden kann. In diesem Fall werden sowohl die Authentifizierung als auch die Autorisierung von dem Netzwerkverbindungs-Rechner geprüft.

Nachteil dieser Vorgehensweise ist die Notwendigkeit einer Schnittstelle zu der Datenbank an dem Netzwerkverbindungs-Rechner. Sofern das Kommunikationssystem eine Mehrzahl solcher Netzwerkverbindungs-Rechner aufweist, die jeweils zwei unterschiedliche Kommunikationsnetze miteinander verbinden und jeweils eine Umsetzung der IP-Adresse vornehmen, müsste die Überprüfung auf Autorisierung und Authentisierung in jedem der Netzwerkverbindungs-Rechner durchgeführt werden. Dies bedeutet, dass jeder der Mehrzahl der Netzwerkverbindungs-Rechner Zugriff auf die Daten der Anwenderdatenbank benötigen würde.

Die Europäische Patentanmeldung EP 1 267 548 A2 beschreibt eine Methode und ein System zum Integrieren des Kerberos-Sicherheitsmechanismus in einen Nachrichtenfluss einer Signalisierung in einem Session Initiation Protokoll, um eine gegenseitige Authentifizierung eines SIP Clients und eines SIP Proxys zu ermöglichen.

Die Aufgabe der vorliegenden Erfindung besteht deshalb darin, ein Kommunikationssystem und ein Verfahren zum Anmelden einer Kommunikationsbeziehung in einem Kommunikationssystem zu schaffen, die eine hohe Sicherheit bei geringem Administrationsaufwand gewährleisten.

Diese Aufgabe wird durch ein Kommunikationssystem mit den Merkmalen des Patentanspruches 1 und durch ein Verfahren zum Anmelden einer Kommunikationsbeziehung in einem Kommunikationssystem mit den Merkmalen des Patentanspruches 13 gelöst.

Das erfindungsgemäße Kommunikationssystem ist derart eingerichtet, dass zum Anmelden einer Kommunikationsbeziehung der Kommunikationseinheit in dem Kommunikationssystem eine Anfrage-Nachricht von der Kommunikationseinheit über den Netzwerkverbindungs-Rechner an den Verbindungssteuerungs-Rechner übertragen wird, die in dem Netzwerkverbindungs-Rechner auf Authentizität und in dem Verbindungssteuerungs-Rechner auf Autorisierung überprüft wird.

Das erfindungsgemäße Verfahren weist die nachfolgenden Schritte auf: Übertragen einer Anfrage-Nachricht von der Kommunikationseinheit an den Verbindungssteuerungs-Rechner über den Netzwerkverbindungs-Rechner; Durchführen einer Authentifikation der Anfrage-Nachricht durch den Netzwerkverbindungs-Rechner; Weiterleiten der Anfrage-Nachricht an den Verbindungssteuerungs-Rechner, falls die Authentifikation positiv ausfiel; Überprüfung der Autorisierung der Anfrage-Nachricht durch den Verbindungssteuerungs-Rechner; und Übertragen einer Antwort-Nachricht an die die Anfrage-Nachricht sendende Kommunikationseinheit.

Der erfindungsgemäße Netzwerkverbindungs-Rechner ist derart eingerichtet, dass er eine von einer Kommunikationseinheit an einen Verbindungssteuerungs-Rechner weiterzuleitende Anfrage-Nachricht nur auf ihre Authentizität überprüft und eine Weiterleitung nur im Falle einer positiven Authentifizierung vornimmt.

Vorteilhafte Ausgestaltungen ergeben sich aus den abhängigen Patentansprüchen.

Das Grundprinzip der Erfindung besteht in einer Aufteilung der Überprüfung auf Authentizität und Autorisierung. Während die Authentifizierung einer Anfrage-Nachricht in einem Netzwerkverbindungs-Rechner erfolgt, erfolgt eine Autorisierung erst dann, wenn die Anfrage-Nachricht dem Verbindungssteuerungs-Rechner zugeführt wurde. Der Vorteil besteht darin, dass lediglich der Verbindungssteuerungs-Rechner mit einer Verbindung zu einer Datenbank, in welcher sich anwenderbezogene Daten zur Überprüfung einer Autorisierung befinden, hergestellt sein muss. Diese Daten brauchen jeweiligen zwischengeschalteten Netzwerkverbindungs-Rechnern hingegen nicht zur Verfügung gestellt werden, da zur Überprüfung der Authentizität keine weiteren anwenderbezogenen Daten benötigt werden. Die Authentizität kann mit in einer Anfrage-Nachricht befindlichen Informationen allein vorgenommen werden.

Die Erfindung lässt sich vorteilhaft einsetzen, wenn die Kommunikationseinheit und der Verbindungssteuerungs-Rechner unterschiedlichen Kommunikationsnetzen zugeordnet sind, wobei die Umsetzung jeweiliger IP-Adressen durch einen Netzwerkverbindungs-Rechner erfolgt. Diese Umsetzung wird als Network Address Translation (NAT) bezeichnet. Da bei der Übertragung einer Anfrage-Nachricht zur Sicherstellung der Integrität und Authentizität kryptographische Checksummen übertragen werden, erfolgt im Rahmen der Umsetzung der IP-Adresse auch eine Änderung der Checksumme. Da die Überprüfung der Checksumme der Anfrage-Nachricht von dem mit der Kommunikationseinheit verbundene Netzwerkverbindungs-Rechner und damit die Authentifizierung erfolgt, kann die Nachricht zur Adress-Umsetzung ohne weiteres verändert werden, da diese ursprüngliche Checksumme bzw. Signatur für eine Überprüfung der Autorisierung in dem Verbindungssteuerungs-Rechner nicht mehr benötigt wird.

Vorteilhaft stellt die Kommunikationseinheit einen Rechner oder einen weiteren Netzwerkverbindungs-Rechner dar, welcher mit zumindest einer weiteren Kommunikationseinheit gekoppelt ist. Das erfindungsgemäße Verfahren lässt sich somit gleichermaßen für die Anmeldung eines Rechners (Hardware oder Software auf einem Rechner) oder eines weiteren Netzwerkverbindungs-Rechners einsetzen. Eine Mehrzahl an seriell miteinander gekoppelten Netzwerkverbindungs-Rechnern dient dazu, eine entsprechende Mehrzahl an Kommunikationsnetzen miteinander zu verbinden, wobei ein jeweiliger Netzwerkverbindungs-Rechner eine Adress-Umsetzung zwischen zwei Kommunikationsnetzen vornimmt.

Bevorzugt sind in einem eingerichteten Kommunikationssystem jeweils zwei der Kommunikationselemente durch eine Vertrauensbeziehung miteinander verbunden. Der Begriff "eingerichtet" bedeutet hierbei, dass solche Kommunikationselemente bereits authentifiziert und autorisiert sind, so dass die Übersendung von Nachrichten mit stark vereinfachten Überprüfungen stattfinden kann. So braucht insbesondere keine Autorisierung der Nachricht der Kommunikationseinheit mehr erfolgen, wohingegen eine Authentifikation auch der späteren Datennachrichten erfolgt.

Die Vertrauensbeziehung kann beispielsweise durch ein (voradministriertes) Passwort oder ein gemäß dem Diffie-Hellman-Verfahren gebildetes Geheimnis dargestellt sein. Bevorzugt ist jede Vertrauensbeziehung durch ein Passwort oder ein gemäß dem Diffie-Hellman-Verfahren gebildetes Geheimnis dargestellt. Dies bedeutet mit anderen Worten, dass das Passwort bzw. das Geheimnis zwischen jedem Kommunikationselementpaar unterschiedlich sein kann. Bevorzugt besteht eine Vertrauensbeziehung nur nach vorheriger positiver Authentifizierung und positiver Autorisierung durch den Verbindungssteuerungs-Rechner.

Bevorzugt erfolgt die Übertragung einer Nachricht zwischen zwei Kommunikationselementen unter Verwendung eines digitalen Zertifikats, so lange zwischen den zwei Kommunikationselementen noch keine Vertrauensbeziehung besteht. Zu diesem Zweck weist jedes Kommunikationselement ein persönliches Zertifikat und einen privaten Schlüssel auf. Weiterhin weist jedes Kommunikationselement zumindest ein sog. Root-Zertifikat, mit dem oder denen das persönliche Zertifikat der verbundenen Kommunikationselemente signiert ist oder sind, auf. Dies ermöglicht, trotz einer Adress-Umsetzung und damit Änderung der zu übertragenden Daten, die Überprüfung der Authentizität einer Nachricht, welche von einem benachbarten Kommunikationselement übertragen wurde.

Die Erfindung ermöglicht es in vorteilhafter Weise, dass jedes Kommunikationselement nur die Adressen der mit ihm verbundenen Kommunikationselemente kennt. Diese Vorgehensweise erleichtert die Administration des gesamten Kommunikationssystems erheblich.

Gemäß einer vorteilhaften Ausgestaltung des erfindungsgemäßen Verfahrens erfolgt vor dem Übertragen der Anfrage-Nachricht der Aufbau einer Vertrauensbeziehung zwischen dem Netzwerkverbindungs-Rechner und dem Verbindungssteuerungs-Rechner. Der Aufbau der Vertrauensbeziehung erfolgt, wie oben beschrieben, unter Verwendung eines digitalen Zertifikats. Zu diesem Zweck sendet der mit dem Verbindungssteuerungs-Rechner verbundene Netzwerkverbindungs-Rechner eine Anfrage-Nachricht an diesen, die durch den Verbindungssteuerungs-Rechner authentifiziert und autorisiert wird. Sofern beide Überprüfungen positiv ausfielen, überträgt der Verbindungssteuerungs-Rechner eine Antwort-Nachricht an den Netzwerkverbindungs-Rechner, wobei gleichzeitig ein Geheimnis vereinbart wird. Dieses stellt die Basis für die dann bestehende Vertrauensbeziehung dar.

Das Weiterleiten der von der Kommunikationseinheit an den Verbindungssteuerungs-Rechner gesendeten Anfrage-Nachricht erfolgt unter Verwendung der zwischen dem Netzwerkverbindungs-Rechner und dem Verbindungssteuerungs-Rechner vereinbarten Vertrauensbeziehung, d.h. des ausgehandelten Geheimnisses.

Bevorzugt erfolgt die Datenübertragung zwischen zwei Kommunikationselementen, zwischen denen noch keine Vertrauensbeziehung besteht, unter Verwendung von Zertifikaten und die Datenübertragung zwischen zwei Kommunikationselementen, zwischen denen bereits eine Vertrauensbeziehung besteht, unter Verwendung eines Geheimnisses oder Passwortes.

Zum effizienten Einrichten eines Kommunikationssystems ist es sinnvoll, Vertrauensbeziehungen, ausgehend von dem Verbindungssteuerungs-Rechner in Richtung weiter davon entfernter Netzwerkverbindungs-Rechner oder allgemein Kommunikationselemente vorzunehmen. In einem Kommunikationssystem mit einer Mehrzahl an Netzwerkverbindungs-Rechnern müssen diese deshalb eine Vertrauensbeziehung mit dem Verbindungssteuerungs-Rechner aufgebaut haben, bevor sich eine Kommunikationseinheit in dem Kommunikationssystem anmelden möchte. In diesem Fall muss lediglich die Übertragung der Anfrage-Nachricht von der Kommunikationseinheit zu dem mit dieser verbundenen Netzwerkverbindungs-Rechner über ein Zertifikat abgewickelt werden. Dies bedeutet, der mit der Kommunikationseinheit verbundene Netzwerkverbindungs-Rechner überprüft die Authentizität der Anfrage-Nachricht. Ist diese positiv, so kann die Anfrage-Nachricht über den Netzwerkverbindungs-Rechner oder die Mehrzahl der Netzwerkverbindungs-Rechner direkt - eventuell unter jeweiliger Adress-Umsetzung - an den Verbindungssteuerungs-Rechner weitergeleitet werden, ohne dass eine weitere Überprüfung der Authentizität der Kommunikationseinheit durch die dazwischen liegenden Netzwerkverbindungs-Rechner statt zu finden braucht. Dies gilt jedoch nur dann, wenn sämtliche in der Übertragungsstrecke liegenden Netzwerkverbindungs-Rechner mit dem Verbindungssteuerungs-Rechner bereits eine Vertrauensbeziehung haben.

Bevorzugt erfolgt das Anmelden der Mehrzahl an Netzwerkverbindungs-Rechnern der Reihe nach, beginnend mit dem mit dem Verbindungssteuerungs-Rechner verbundenen Netzwerkverbindungs-Rechner.

In einer weiteren vorteilhaften Ausgestaltung erfolgt nach positiver Authentifizierung und Autorisierung als weiterer Schritt der Aufbau einer Vertrauensbeziehung zwischen der die Anfrage-Nachricht sendenden Kommunikationseinheit und dem mit dieser verbundenen Netzwerkverbindungs-Rechner. Nachdem eine solche Vertrauensbeziehung aufgebaut wurde, kann die Kommunikationseinheit Nachrichten an den Verbindungssteuerungs-Rechner unter Verwendung einfacherer kryptographischer Methoden übertragen.

In einer weiteren Ausgestaltung des erfindungsgemäßen Verfahrens wird die Anfrage-Nachricht bei der Übertragung von der Kommunikationseinheit an den Verbindungssteuerungs-Rechner durch jeden Netzwerkverbindungs-Rechner zumindest teilweise modifiziert. Die Modifikation der Daten umfasst dabei bevorzugt die Umsetzung jeweiliger IP-Adressen.

Zweckmäßigerweise wird die Antwort-Nachricht bei der Übertragung von den Verbindungssteuerungs-Rechnern an die Kommunikationseinheit durch die Kommunikationseinheit auf Authentizität geprüft.

Die Erfindung lässt sich wie folgt zusammenfassen: Das Grundprinzip besteht in einer Aufteilung von Authentifizierung und Autorisierung einer sich in einem Kommunikationssystem anmeldenden Kommunikationseinheit. Während die Authentifizierung von der Kommunikationseinheit gesendeten Anfrage-Nachricht an dem mit dieser verbundenen Netzwerkverbindungs-Rechner geschieht, erfolgt die Autorisierung durch den Verbindungssteuerungs-Rechner. Genauer bedeutet dies, dass die Kommunikationseinheit durch den Netzwerkverbindungs-Rechner, der bereits durch vorherige Anmeldung bei dem Verbindungssteuerungs-Rechner eine Sicherheitsbeziehung zu diesem besitzt, authentifiziert wird. Der Netzwerkverbindungs-Rechner reicht anschließend eine modifizierte Anfrage-Nachricht, ggfs. über weitere Netzwerkverbindungs-Rechner, bis zum Verbindungssteuerungs-Rechner weiter. Vorzugsweise wird, da es sich hierbei nicht um eine standardkonforme, sondern eine modifizierte Nachricht handelt, eine spezielle Kennzeichnung verwendet. An dem Verbindungssteuerungs-Rechner, der durch einen oder eine Mehrzahl an Netzwerkverbindungs-Rechner von der Kommunikationseinheit getrennt ist, wird schließlich die Autorisierung geprüft. Die Antwort-Nachricht des Verbindungssteuerungs-Rechners wird anschließend über die Kette der Netzwerkverbindungs-Rechner bis zu dem mit der Kommunikationseinheit verbundenen Netzwerkverbindungs-Rechner übertragen. Dieser Netzwerkverbindungs-Rechner beantwortet die Anfrage-Nachricht der Kommunikationseinheit mit einer Standardkonformen Antwort-Nachricht, deren Authentizität die Kommunikationseinheit überprüfen kann. Bei diesem als "Handshake" bezeichneten Vorgang werden im Falle einer erfolgreichen Anmeldung z.B. Diffie-Hellman-Parameter zwischen der Kommunikationseinheit und dem mit dieser verbundenen Netzwerkverbindungs-Rechner ausgetauscht. Aus diesen Parametern wird ein gemeinsames Geheimnis berechnet, so dass nun auch eine Sicherheitsbeziehung zwischen der Kommunikationseinheit und dem mit dieser verbundenen Netzwerkverbindungs-Rechner und somit auch mit dem Verbindungssteuerungs-Rechner besteht.

Die Vorteile des erfindungsgemäßen Verfahrens bestehen in einer sicheren Anmeldung einer Kommunikationseinheit in einem Kommunikationssystem, auch wenn in diesem eine Vielzahl an Adress-Umsetzungen stattfindet. Die Administration des Kommunikationssystems wird vereinfacht, da lediglich eine einzige Datenbank mit anwenderbezogenen Daten notwendig ist, wobei diese alleine mit dem Verbindungssteuerungs-Rechner verbunden ist. Ein wie oben beschriebenes Kommunikationssystem erfordert keinerlei Änderungen technischer Art an einer Kommunikationseinheit. Der Aufwand für Authentifizierung, insbesondere Signatur- und aufwendige Diffie-Hellman-Berechnungen, werden fast vollständig von dem bislang zentral genutzten Verbindungssteuerungs-Rechner an jeweilige Netzwerkverbindungs-Rechner verlagert.

Die Erfindung und deren Vorteile werden nachfolgend anhand der Figuren näher erläutert. Es zeigen:
- Figur 1: ein erfindungsgemäßes Kommunikationssystem in einem ersten Ausführungsbeispiel,
- Figur 2: das Anmelden eines Netzwerkverbindungs-Rechners an einem Verbindungssteuerungs-Rechner zum Aufbau einer Vertrauensbeziehung in dem ersten Ausführungsbeispiel,
- Figur 3: das Anmelden einer Kommunikationseinheit an dem Verbindungssteuerungs-Rechner in dem ersten Ausführungsbeispiel,
- Figur 4: die Gegenüberstellung zweier Tabellen am Beispiel von H.235 Datenfeldern, aus der die in einer Anfrage-Nachricht übertragenden Felder und deren Modifikation durch einen Netzwerkverbindungs-Rechner während des Anmeldens an einem Verbindungssteuerungs-Rechner hervorgeht,
- Figur 5: das Übertragen einer Datennachricht von einer angemeldeten Kommunikationseinheit an einen Verbindungssteuerungs-Rechner nach positiver Authentifizierung und Autorisierung in dem ersten Ausführungsbeispiel,
- Figur 6: den Ablauf einer gescheiterten Anmeldung eines Netzwerkverbindungs-Rechners in dem ersten Ausführungsbeispiel,
- Figur 7: den Ablauf einer gescheiterten Anmeldung eines Netzwerkverbindungs-Rechners in dem ersten Ausführungsbeispiel,
- Figur 8: den Ablauf einer gescheiterten Anmeldung einer Kommunikationseinheit in dem ersten Ausführungsbeispiel,
- Figur 9: den Ablauf einer gescheiterten Anmeldung einer Kommunikationseinheit in dem ersten Ausführungsbeispiel,
- Figur 10: ein Kommunikationssystem in einem zweiten Ausführungsbeispiel mit parallel angeordneten Netzwerkverbindungs-Rechnern für eine verbesserte Lastverteilung,
- Figur 11: ein Kommunikationssystem in einem dritten Ausführungsbeispiel mit einer Mehrzahl an seriell miteinander gekoppelten Netzwerkverbindungs-Rechnern,
- Figur 12: das Anmelden einer Kommunikationseinheit in dem dritten Ausführungsbeispiel, wobei zwischen jeweiligen Netzwerkverbindungs-Rechnern und dem Verbindungssteuerungs-Rechner eine Vertrauensbeziehung bereits existiert,
- Figur 13: das Übertragen einer Datennachricht von einer angemeldeten Kommunikationseinheit an den Verbindungssteuerungs-Rechner in dem dritten Ausführungsbeispiel,
- Figur 14: die gescheiterte Anmeldung einer Kommunikationseinheit in dem dritten Ausführungsbeispiel und
- Figur 15: die gescheiterte Anmeldung einer Kommunikationseinheit in dem dritten Ausführungsbeispiel.

Die nachfolgend beschriebenen Ausführungsbeispiele verschiedener Kommunikationssysteme werden bevorzugt für die IP (Internet Protocol) basierte Telephonie verwendet.

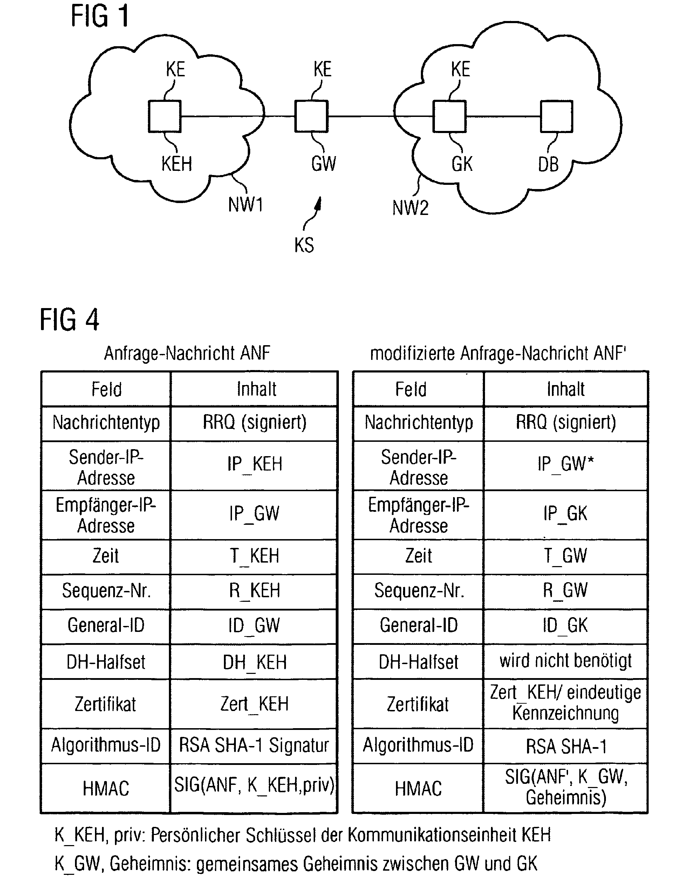

Figur 1 zeigt die einfachste Form eines erfindungsgemäßen Kommunikationssystems KS in einem ersten Ausführungsbeispiel. Als Kommunikationselemente KE weist das erfindungsgemäße Kommunikationssystem KS eine Kommunikationseinheit KEH, einen Netzwerkverbindungs-Rechner GW, einen Verbindungssteuerungs-Rechner GK und eine Datenbank DB auf. Die Datenbank DB, die anwenderspezifische Informationen über die Kommunikationseinheit KEH enthält, ist erfindungsgemäß ausschließlich mit dem Verbindungssteuerungs-Rechner GK verbunden. Sie beinhaltet Autorisierungsdaten, wie z.B. die Zertifikate sämtlicher Kommunikationseinheiten und Netzwerkverbindungs-Rechner.

Die Kommunikationseinheit KEH ist einem ersten Kommunikationsnetz NW1 zugeordnet. Der Verbindungssteuerungs-Rechner GK und die mit ihm verbundene Datenbank DB sind einem zweiten Kommunikationsnetz NW2 zugeordnet. Jeweilige Kommunikationselemente in dem ersten oder dem zweiten Kommunikationsnetz NW1, NW2 können auf der Basis unterschiedlicher Protokolle arbeiten. Der Netzwerkverbindungs-Rechner GW, der die Kommunikationselemente des ersten Kommunikationsnetzes NW1 mit den Kommunikationselementen des zweiten Kommunikationsnetzes NW2 verbindet, übernimmt die Protokollumsetzung und -übersetzung, insbesondere der Adressen, Formate, Codes usw. Der Netzwerkverbindungs-Rechner, der auch als Gateway bezeichnet wird, arbeitet auf der kleinsten gemeinsamen Schicht der zu verbindenden Kommunikationsnetze. Der Netzwerkverbindungs-Rechner kann als Netzknoten adressiert und von dem ersten und dem zweiten Kommunikationsnetz NW1, NW2 angesprochen werden.

Entgegen der zeichnerischen Darstellung der Figur 1 kann das erste Kommunikationsnetz NW1 eine Vielzahl an Kommunikationseinheiten KEH aufweisen, die miteinander und/oder mit dem Netzwerkverbindungs-Rechner GW verbunden sind. Entsprechendes gilt für das zweite Kommunikationsnetz NW2.

Für das erfindungsgemäße Anmelden einer Kommunikationseinheit an dem Verbindungssteuerungs-Rechner benötigt jedes Kommunikationselement KE ein persönliches Zertifikat und den dazu passenden privaten Schlüssel. Darüber hinaus benötigt jedes Kommunikationselement KE ein Root-Zertifikat, mit dem das persönliche Zertifikat jedes unmittelbar benachbarten Kommunikationselements signiert wurde. Auf das erste Ausführungsbeispiel der Figur 1 bezogen, bedeutet dies, dass die Kommunikationseinheit KEH das Root-Zertifikat des Netzwerkverbindungs-Rechners GW und ein persönliches Zertifikat Zert_KEH aufweist. Der Netzwerkverbindungs-Rechner GW weist ein persönliches Zertifikat Zert_GW und die Root-Zertifikate der Kommunikationseinheit KEH und des Verbindungssteuerungs-Rechners GK auf. Der Verbindungssteuerungs-Rechner weist ein persönliches Zertifikat Zert_GK sowie das Root-Zertifikat des Netzwerkverbindungs-Rechners GW auf. Ein jeweiliges Root-Zertifikat dient zur Überprüfung der Echtheit des persönlichen Zertifikats.

Um die reibungslose Übertragung von Nachrichten zwischen jeweiligen Kommunikationselementen sicher zu stellen, benötigt die Kommunikationseinheit KEH anstelle der Adresse des Verbindungssteuerungs-Rechners GK die Adresse des mit der Kommunikationseinheit KEH verbundenen Netzwerkverbindungs-Rechners GW. Dieser Netzwerkverbindungs-Rechner benötigt wiederum jeweils die Adresse des nächstfolgenden Netzwerkverbindungs-Rechners, sofern vorhanden. Lediglich der mit dem Verbindungssteuerungs-Rechner GK verbundene Netzwerkverbindungs-Rechner GW erhält die Adresse des Verbindungssteuerungs-Rechners GK.

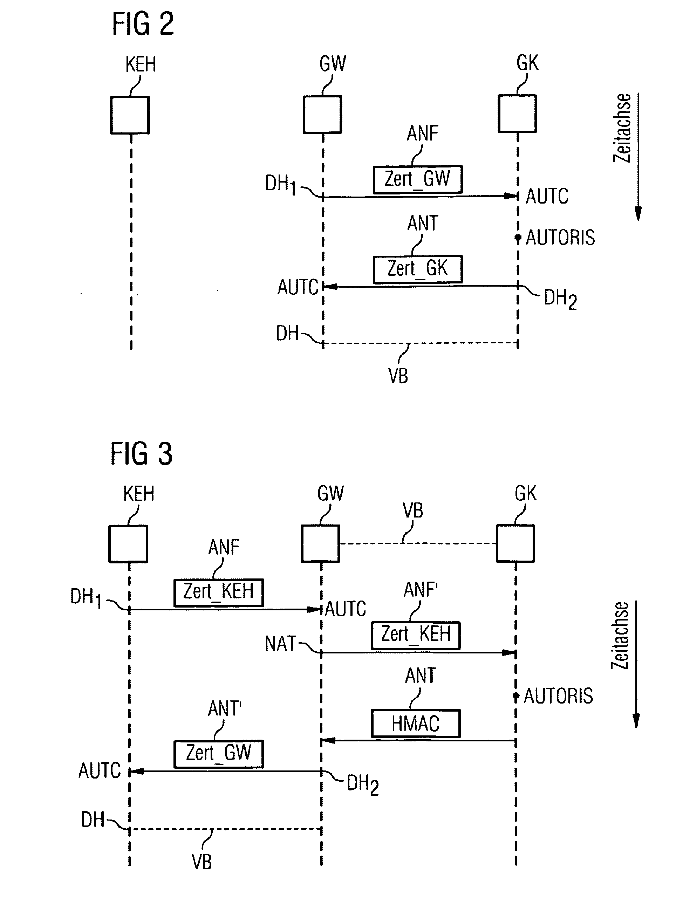

In den Figuren 2 bis 9 werden verschiedene Abläufe der Einrichtung und des Betriebs des erfindungsgemäßen Kommunikationssystems gemäß dem ersten Ausführungsbeispiel nach Figur 1 beschrieben.

Für ein schnelles und effizientes Anmelden einer Kommunikationseinheit in einem erfindungsgemäßen Kommunikationssystem KS ist es zunächst erforderlich, dass die Datenübertragung zwischen dem Netzwerkverbindungs-Rechner GW und dem Verbindungssteuerungs-Rechner GK auf schnelle und einfache Weise erfolgen kann. Zu diesem Zweck ist es zweckmäßig, wenn sich zunächst der Netzwerkverbindungs-Rechner GW an dem Verbindungssteuerungs-Rechner GK anmeldet. Der zeitliche Ablauf und die dabei verwendeten Sicherheitsmechanismen sind in Figur 2 dargestellt. Der Netzwerkverbindungs-Rechner GW sendet eine Anfrage-Nachricht ANF, die mittels des persönlichen Zertifikats des Netzwerkverbindungs-Rechners Zert_GW signiert ist, an den Verbindungssteuerungs-Rechner GK. In dieser Nachricht ist darüber hinaus ein sog. Diffie-Hellman-Halfset, das u.a. die öffentlichen Parameter für das Diffie-Hellman-Verfahren enthält, enthalten (gekennzeichnet mit dem Bezugszeichen DH₁). Nach positiver Authentifizierung (AUTC) erfolgt die Autorisierung (AUTORIS) des Netzwerkverbindungs-Rechners, in der der Verbindungssteuerungs-Rechner GK die mit ihm verbundene Datenbank DB auf entsprechende Einträge untersucht. War die Autorisierung positiv, so überträgt der Verbindungssteuerungs-Rechner GK eine mit seinem persönlichen Zertifikat Zert_GK signierte Antwort-Nachricht ANT an den Netzwerkverbindungs-Rechner GW, wobei ebenfalls ein Diffie-Hellman-Halfset übertragen wird (Bezugszeichen DH₂), um ein gemeinsames Geheimnis zwischen dem Netzwerkverbindungs-Rechner GW und dem Verbindungssteuerungs-Rechner GK zu erzeugen. Die Antwort-Nachricht ANT wird mittels des dem Netzwerkverbindungs-Rechner GW vorliegenden Root-Zertifikats des Verbindungssteuerungs-Rechners GK auf Authentizität (AUTC) überprüft. War diese Überprüfung erfolgreich, so wird mit dem Diffie-Hellman-Verfahren ein Geheimnis errechnet (Bezugszeichen DH), das die Basis der Vertrauensbeziehung VB gründet.

Sofern in den nachfolgenden Figuren eine Vertrauensbeziehung zwischen zwei benachbarten Kommunikationselementen besteht, ist dies durch eine durchbrochene Linie dargestellt und gemäß dem oben beschriebenen Vorgehen aufgebaut worden.

Die Existenz einer Vertrauensbeziehung VB ermöglicht nun die Übertragung einer Nachricht zwischen dem Netzwerkverbindungs-Rechner GW und dem Verbindungssteuerungs-Rechner GK ohne die Verwendung der Zertifikate. Stattdessen kann auf das ausgehandelte Geheimnis zurückgegriffen werden, wodurch sich die Überprüfung einer Nachricht vereinfacht und wesentlich verschnellert.

Diese Vorgehensweise wird in dem Standard H.235 Annex F als hybrides Profil bezeichnet, in dem zunächst der Verbindungsaufbau mittels Zertifikaten und die weitere Kommunikation mittels eines Geheimnisses unter Verwendung von HMAC (Hash-Based Message Authentication Code) erfolgt. Dies ist ein in RFC2104 spezifizierter Mechanismus zur Authentifizierung von Nachrichten, der kryptographische Hash-Funktionen verwendet. HMAC kann in Verbindung mit einem geheimen, gemeinsam verwendeten Schlüssel mit jeder beliebigen kryptographischen Einweg-Hash-Funktion, z.B. SHA-1 (Secure Hash Algorithm), verwendet werden. Die kryptographische Stärke des HMAC hängt von den Eigenschaften der zu Grunde liegenden Hash-Funktion ab.

Nachdem eine Vertrauensbeziehung zwischen dem Netzwerkverbindungs-Rechner GW und dem Verbindungssteuerungs-Rechner GK aufgebaut wurde, kann die Anmeldung der Kommunikationseinheit KEH in dem Kommunikationssystem KS, insbesondere an dem Verbindungssteuerungs-Rechner GK, erfolgen. Dieser Vorgang ist in Figur 3 dargestellt. Zu diesem Zweck überträgt die Kommunikationseinheit KEH eine Anfrage-Nachricht ANF, die um ein Diffie-Hellman-Halfset DH₁ ergänzt und mittels ihres persönlichen Zertifikats Zert_KEH signiert wurde, an den Netzwerkverbindungs-Rechner GW. Dieser übernimmt, gemäß dem erfindungsgemäßen Verfahren, die Authentifikation der Anfrage-Nachricht ANF. Dies ist ihm aufgrund des vorliegenden Root-Zertifikats der Kommunikationseinheit KEH möglich. Ist die Authentifikation positiv, so leitet er die Anfrage-Nachricht unter Veränderung zumindest eines Teils der Daten (NAT) an den Verbindungssteuerungs-Rechner GK weiter. Die Verschlüsselung der modifizierten Anfrage-Nachricht ANF' erfolgt dabei mittels des HMAC-Verschlüsselungs-Verfahrens. Die Veränderung der Daten betrifft insbesondere die Umsetzung der Adresse.

Dies wird im Zusammenhang mit Figur 4 am Beispiel des Standards H.235 genauer beschrieben. Figur 4 zeigt zwei Tabellen, mit identischen Nachrichtenfeldern, die unter anderem in der Anfrage-Nachricht ANF enthalten sind. Die Felder umfassen den Nachrichtentyp, Sender-IP-Adresse, Ziel-IP-Adresse, Zeit, Sequenznummer, General-ID, DH-Halfset, Zertifikat, Algorithmus-OID und Signatur.

Erhält der Netzwerkverbindungs-Rechner GW eine Anfrage-Nachricht ANF, werden u.a. folgende Überprüfungen (in beliebiger Reihenfolge) durchgeführt:
- Liegt T KEH innerhalb des Zeitfensters?
- Ist ein Root-Zertifikat zur Überprüfung des Zertifikats Zert_KEH vorhanden?
- Stimmt die Signatur der Nachricht?
- Stimmt die Signatur des Zertifikats Zert_KEH?

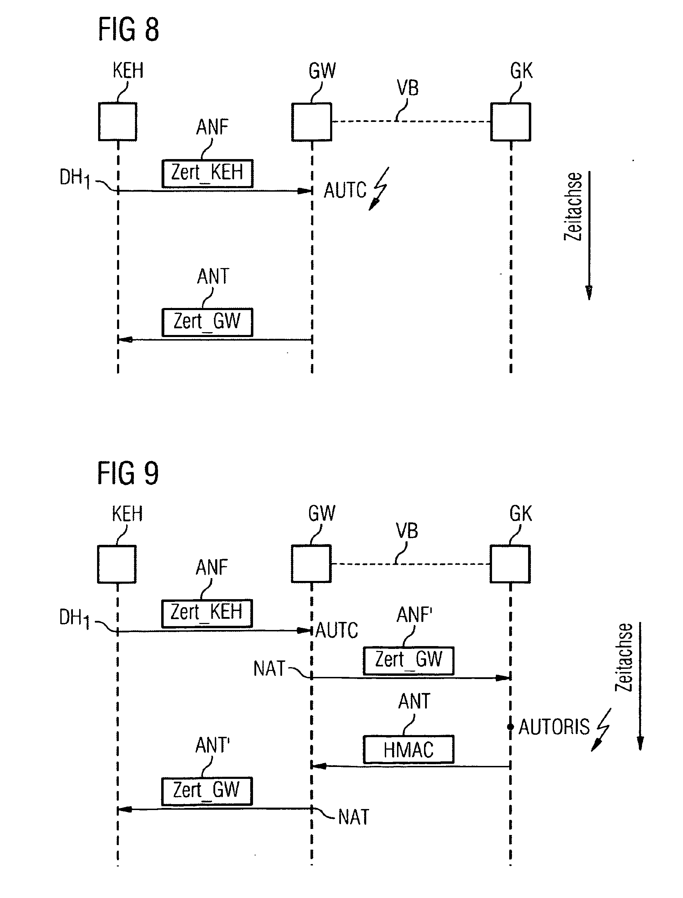

Es werden somit alle Überprüfungen durchgeführt, außer der Zulässigkeit des Profils für die Kommunikationseinheit, da hierzu die Daten aus der Datenbank DB benötigt würden, auf die der Netzwerkverbindungs-Rechner GW jedoch keinen Zugriff hat. Falls eine dieser Überprüfungen fehlschlägt, wird die Kommunikationseinheit mittels einer signierten Antwort-Nachricht ANT abgelehnt (Figur 8). Die Anfrage-Nachricht wird in diesem Fall nicht an den Verbindungssteuerungs-Rechner GK weiter geleitet.

Der Netzwerkverbindungs-Rechner GW wird die im Zusammenhang mit Figur 4 beschriebenen Felder zumindest teilweise überschreiben, da die IP-Adressen in dem zweiten Kommunikationsnetz NW2 unterschiedlich sind. Darüber hinaus muss der Empfänger der modifizierten Anfrage-Nachricht ANF' unterscheiden können, ob es sich um eine gewöhnliche signierte oder "modifizierte" Anfrage-Nachricht handelt. Dies wird über eine geänderte Algorithmus-OID angezeigt.

Erhält im Ausführungsbeispiel gemäß Figur 1 der Verbindungssteuerungs-Rechner GK eine solche modifizierte Anfrage-Nachricht ANF' (Figur 3), so werden u.a. folgende Überprüfungen durchgeführt:
- Liegt der Parameter T_GW innerhalb des Zeitfensters?
- Ist die Sequenznummer R_GW in Ordnung?
- Stimmt der HMAC der modifizierten Anfrage-Nachricht ANF'?

Sind alle Überprüfungen in Ordnung, so wird nun durch den Verbindungssteuerungs-Rechner GK zur Autorisierungskontrolle aus der Datenbank DB das Profil des die Anfrage-Nachricht initiierenden Kommunikationseinheit KEH abgefragt. Dieses der Kommunikationseinheit zugeordnete Profil enthält Informationen, welche das zulässige Zertifikat der Kommunikationseinheit eindeutig identifizieren, entweder das Zertifikat selbst, oder z.B. die Seriennummer und die Bezeichnung des Herausgebers (sog. Issuer).

Der Verbindungssteuerungs-Rechner sendet nun eine Antwort-Nachricht - je nach Ergebnis der Überprüfungen - im H.235 Baseline-Profil, das sich des HMAC bedient, an den Netzwerkverbindungs-Rechner GW. Der Netzwerkverbindungs-Rechner GW übernimmt wiederum eine, wie oben beschriebene, Modifizierung der Daten (NAT), fügt ein DH-Halfset DH₂ hinzu und überträgt die modifizierte Antwort-Nachricht ANT' unter Zuhilfenahme seines privaten Zertifikats Zert_GW an die Kommunikationseinheit KEH. Die Kommunikationseinheit KEH überprüft die modifizierte Antwort-Nachricht ANT' auf Authentizität. War die Überprüfung erfolgreich, so wird aus dem erhaltenen DH-Halfset ein gemeinsames Geheimnis mit dem Netzwerkverbindungs-Rechner GW errechnet (Bezugszeichen DH). Der Integritätsschutz der modifizierten Antwort-Nachricht erfolgt mittels der digitalen Signatur unter Verwendung von Zert_GW.

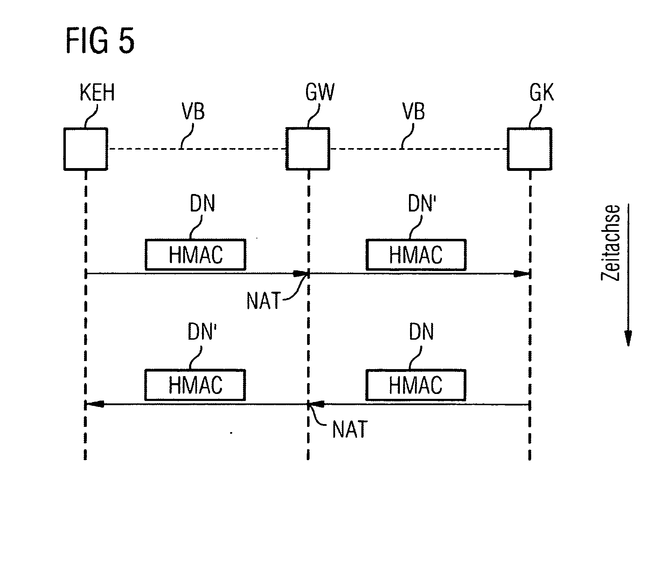

Nachdem nun eine Vertrauensbeziehung zwischen der Kommunikationseinheit KEH und dem Netzwerkverbindungs-Rechner GW sowie zwischen dem Netzwerkverbindungs-Rechner GW und dem Verbindungssteuerungs-Rechner GK besteht, können alle weiteren Daten-Nachrichten mit dem einfacheren Verfahren gemäß HMAC geschützt werden. Es ist dabei zu betonen, dass die in Figur 5 gezeigten Vertrauensbeziehungen VB jeweils auf unterschiedliche Geheimnisse zurückgreifen.

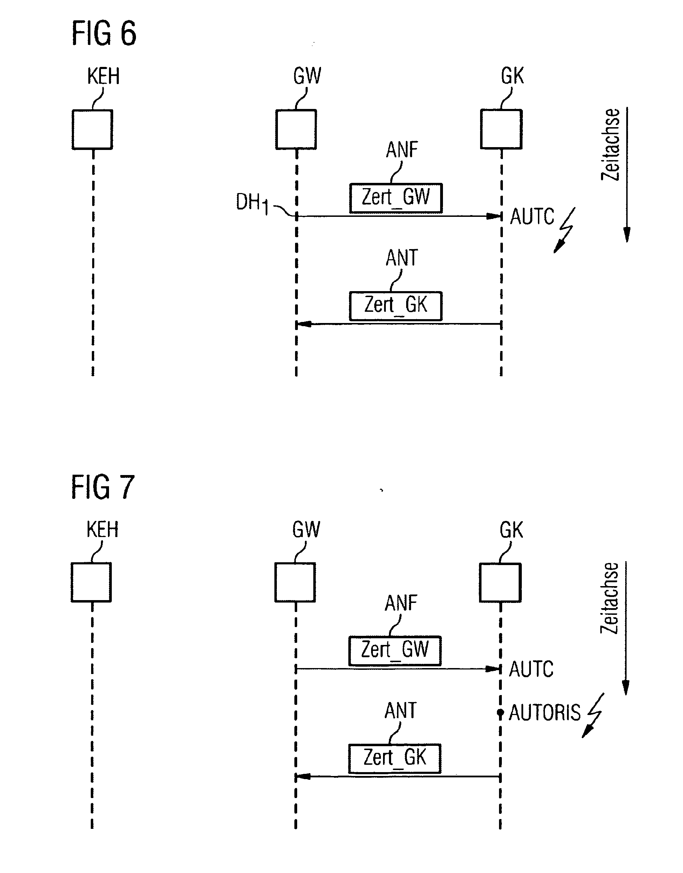

Die Figuren 6 und 7 zeigen den Ablauf einer fehlgeschlagenen Anmeldung eines Netzwerkverbindungs-Rechners GW an dem Verbindungssteuerungs-Rechner GK. Gemäß Figur 6 schlägt die Anmeldung fehl, da eines der im Zusammenhang mit Figur 4 erwähnten Authentifikations-Kriterien nicht erfüllt war. In diesem Falle findet keine Überprüfung auf Autorisierung durch den Verbindungssteuerungs-Rechner statt. Stattdessen wird vielmehr eine entsprechende Antwort-Nachricht, unter Verwendung des Zertifikats Zert GK, an den Netzwerkverbindungs-Rechner GW übertragen, welcher seinerseits eine Authentizitätsprüfung durchführt. In der Antwort-Nachricht wird der Netzwerkverbindungs-Rechner über die Ablehnung der Anmeldung informiert.

Im Unterschied dazu ist die Überprüfung auf Authentizität im Beispiel gemäß Figur 7 positiv, es tritt jedoch bei der Überprüfung auf Autorisierung ein Fehler auf. Auch in diesem Fall wird der Netzwerkverbindungs-Rechner durch eine Antwort-Nachricht ANT über das Fehlschlagen der Anmeldung informiert.

In beiden Fällen der Figur 6 und 7 wird auf die Übermittlung eines DH-Halfsets seitens des Verbindungssteuerungs-Rechners GK verzichtet, da die Vereinbarung eines gemeinsamen Geheimnisses nicht notwendig ist.

In den Figuren 8 und 9 wird davon ausgegangen, dass zwischen dem Netzwerkverbindungs-Rechner GW und dem Verbindungssteuerungs-Rechner GK bereits eine Vertrauensbeziehung VB existiert. Das Übertragen der Anfrage-Nachricht ANF von der Kommunikationseinheit an den Netzwerkverbindungs-Rechner GW und die Überprüfung der Authentifikations-Kriterien erfolgt, wie in Verbindung mit Figur 3 beschrieben. Da eines der Authentifikations-Kriterien jedoch nicht erfüllt wurde, erfolgt in Figur 8 keine Modifikation und Weiterleitung der Anfrage-Nachricht an den Verbindungssteuerungs-Rechner GK. Vielmehr wird durch den Netzwerkverbindungs-Rechner GW eine Antwort-Nachricht, signiert mit Hilfe des Zertifikats Zert_GW, an die Kommunikationseinheit zurückgesandt. Es wird ebenfalls kein Diffie-Hellman-Halfset übermittelt.

Im Gegensatz dazu ist die Überprüfung auf Authentifikation der Anfrage-Nachricht ANF durch den Netzwerkverbindungs-Rechner GW in Figur 9 positiv. Es erfolgt eine Modifikation und Weiterleitung an den Verbindungssteuerungs-Rechner GK, welcher die oben beschriebene Überprüfung auf Autorisierung vornimmt. Bei einem Fehlschlagen dieser Überprüfung übermittelt der Verbindungssteuerungs-Rechner GK unter Verwendung von HMAC eine Antwort-Nachricht ANT an den Netzwerkverbindungs-Rechner GW. Dieser modifiziert die Nachricht und sendet diese unter Verwendung seines Zertifikats Zert_GW an die Kommunikationseinheit KEH weiter, die die modifizierte Antwort-Nachricht ANT' authentifiziert. In der modifizierten Antwort-Nachricht ANT' ist die Information einer verweigerten Anmeldung enthalten.

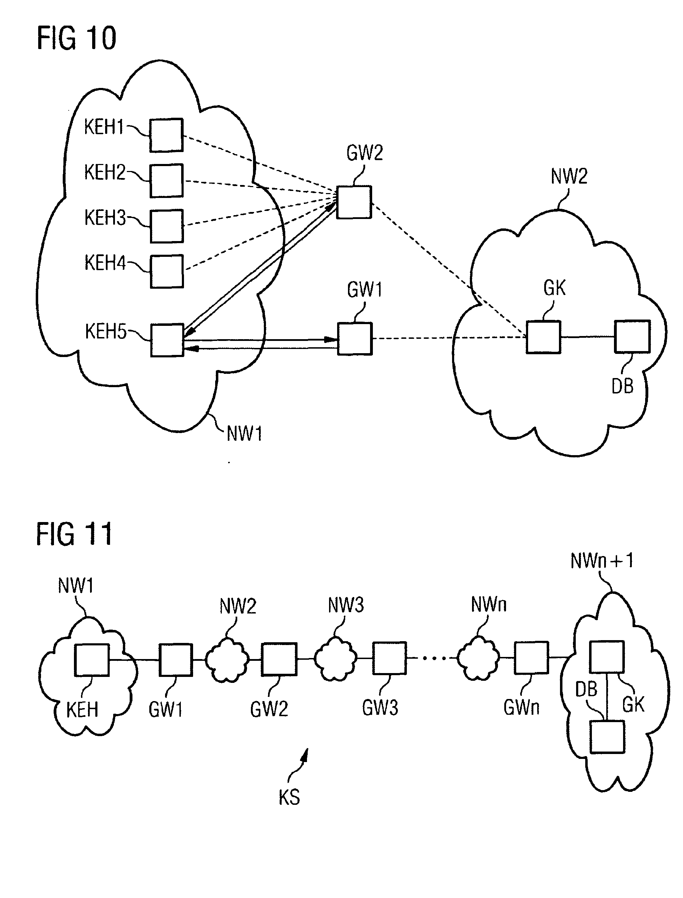

Figur 10 zeigt ein zweites Ausführungsbeispiel eines Kommunikationssystems mit parallelen Netzwerkverbindungs-Rechnern GW1, GW2, die jeweils mit dem Verbindungssteuerungs-Rechner GK gekoppelt sind. Mit dem Netzwerkverbindungs-Rechner GW2 ist eine Mehrzahl von Kommunikationseinheiten KEH1,... KEH4 verbunden. Mit dem Netzwerkverbindungs-Rechner GW1 ist lediglich beispielhaft eine einzige Kommunikationseinheit KEH 5 verbunden. Die Kommunikationseinheiten KEH1,... KEH4 sowie die Kommunikationseinheit KEH5 befinden sich in einem gemeinsamen Kommunikationsnetz NW1. Der Verbindungssteuerungs-Rechner GK und die Datenbank DB sind in einem Kommunikationsnetz NW2 angeordnet.

In der nachfolgenden, kurzen Beschreibung wird davon ausgefangen, dass zwischen den Kommunikationseinheiten KEH1,... KEH4 und dem Netzwerkverbindungs-Rechner GW2 bereits eine Vertrauensbeziehung existiert. Gleichermaßen wird davon ausgegangen, dass Vertrauensbeziehungen zwischen dem Verbindungssteuerungs-Rechner GK und den Netzwerkverbindungs-Rechnern GW1, GW2 existiert.

Die Kommunikationseinheit KEH5 möchte sich nun in dem Kommunikationssystem anmelden. Dazu kann sie eine Anfrage-Nachricht sowohl an den Netzwerkverbindungs-Rechner GW2 als auch an den Netzwerkverbindungs-Rechner GW1 senden. Aufgrund seiner starken Auslastung überträgt der Netzwerkverbindungs-Rechner GW2 nach Überprüfung der Authentizität der Anfrage-Nachricht der Kommunikationseinheit KEH5 eine Antwort-Nachricht an diese, in der er eine Weiterleitung der Anfrage-Nachricht an den Verbindungssteuerungs-Rechner GK verweigert. Die Kommunikationseinheit KEH5 kann nun eine weitere Anfrage-Nachricht an den Netzwerkverbindungs-Rechner GW1 senden, welcher die Behandlung der Anfrage-Nachricht übernimmt. Das weitere Vorgehen entspricht dem im Zusammenhang mit den Figuren 1 bis 9 beschriebenen Vorgehen.

Die Figuren 11 bis 15 beziehen sich auf ein drittes Ausführungsbeispiel eines erfindungsgemäßen Kommunikationssystems, welches in Figur 11 näher dargestellt ist. Das Kommunikationssystem KS zeichnet sich dadurch aus, dass eine Mehrzahl an Netzwerkverbindungs-Rechnern GW1,... GWn vorgesehen sind. Die Mehrzahl an Netzwerkverbindungs-Rechnern sind seriell zwischen der Kommunikationseinheit KEH1, die sich in einen ersten Kommunikationsnetz NW1 befindet, und dem Verbindungssteuerungs-Rechner GK, der zusammen mit der Datenbank DB in einem Kommunikationsnetz NWn+1 gelegen ist. Zwischen jeweils zwei Netzwerkverbindungs-Rechnern GW1, GW2; GW2, GW3; GWn-1, GWn ist ein jeweiliges Kommunikationsnetz NW2, NW3,..., NWn angeordnet.

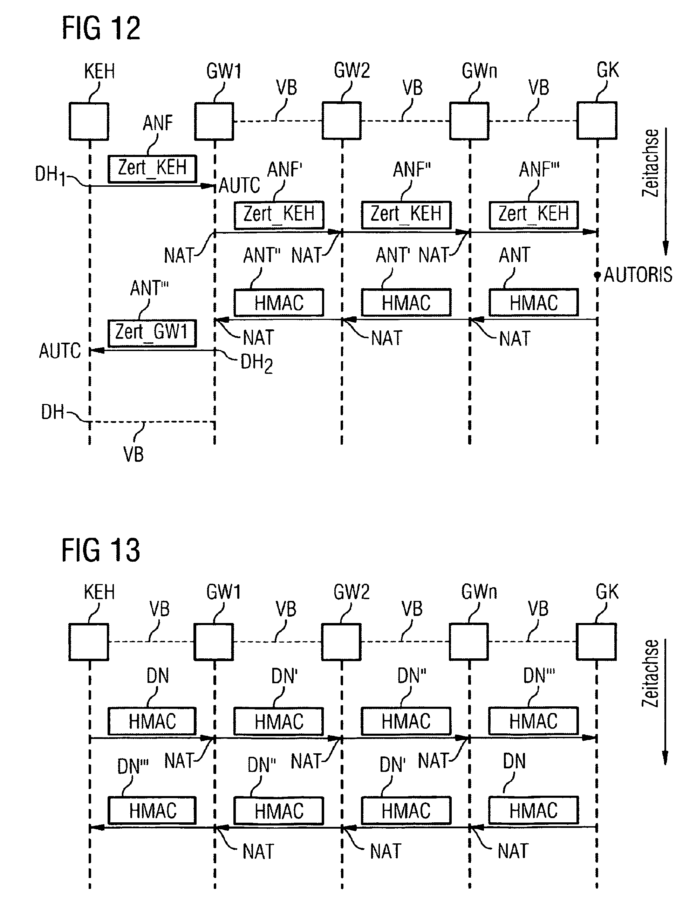

Anhand von Figur 12 wird das Übertragen einer Anfrage-Nachricht ANF von der Kommunikationseinheit KEH über die Mehrzahl der Netzwerkverbindungs-Rechner GW1,... GWn an den Verbindungssteuerungs-Rechner GK beschrieben. Es wird dabei davon ausgegangen, dass zwischen jeweiligen Netzwerkverbindungs-Rechnern GW1,... GWn und zwischen dem Netzwerkverbindungs-Rechner GWn und dem Verbindungssteuerungs-Rechner GK bereits eine Vertrauensbeziehung VB besteht. Zuerst muss eine Vertrauensbeziehung zwischen dem mit dem Verbindungssteuerungs-Rechner GK verbundenen Netzwerkverbindungs-Rechner GWn und dem Verbindungssteuerungs-Rechner GK aufgebaut werden. Der weitere Aufbau der Vertrauensbeziehung erfolgt dann von dem Verbindungssteuerungs-Rechner GK weg. Diese Vorgehensweise ermöglicht es, bei der Übertragung eines Großteils von Nachrichten auf das einfachere Verfahren gemäß HMAC zum Integritätsschutz zurückzugreifen. Die Signierung einer Nachricht mittels eines Zertifikats ist dann jeweils nur im ersten Schritt zwischen dem sich anmeldenden Kommunikationselement und dem benachbarten Kommunikationselement notwendig.

Die Vorgehensweise bei der Anmeldung der Kommunikationseinheit ist prinzipiell identisch mit der in Verbindung mit den Figuren 1 bis 9 beschriebenen. Es wird jedoch explizit darauf hingewiesen, dass eine Überprüfung der Anfrage-Nachricht ANF auf Authentifikation lediglich in dem der Kommunikationseinheit benachbarten Netzwerkverbindungs-Rechner GW1 stattfindet. Verlief die Überprüfung auf Authentifikation positiv, so wird die Nachricht unter jeweils zumindest teilweiser Veränderung von Daten von den anderen Netzwerkverbindungs-Rechnern GW2,..., GWn lediglich an den Verbindungssteuerungs-Rechner weiter gereicht. Entsprechendes gilt für die Übertragung der Antwort-Nachricht von dem Verbindungssteuerungs-Rechner GK an den Netzwerkverbindungs-Rechner GW1. Innerhalb dieses Datenpfads findet lediglich ein Integritätsschutz mittels HMAC statt, wobei die Antwort-Nachricht durch jeden Netzwerkverbindungs-Rechner in den Datenpfad modifiziert wird. Die Übertragung der Antwort-Nachricht ANT''' von dem Netzwerkverbindungs-Rechner GW1 an die Kommunikationseinheit KEH erfolgt, wie in Figur 3, beschrieben.

Aufgrund der nun auch zwischen der Kommunikationseinheit KEH und dem Netzwerkverbindungs-Rechner GW1 existierenden Vertrauensbeziehung können Daten-Nachrichten zwischen der Kommunikationseinheit KEH und dem Verbindungssteuerungs-Rechner GK über das einfachere Verfahren mit HMAC integritätsgeschützt werden (Figur 13).

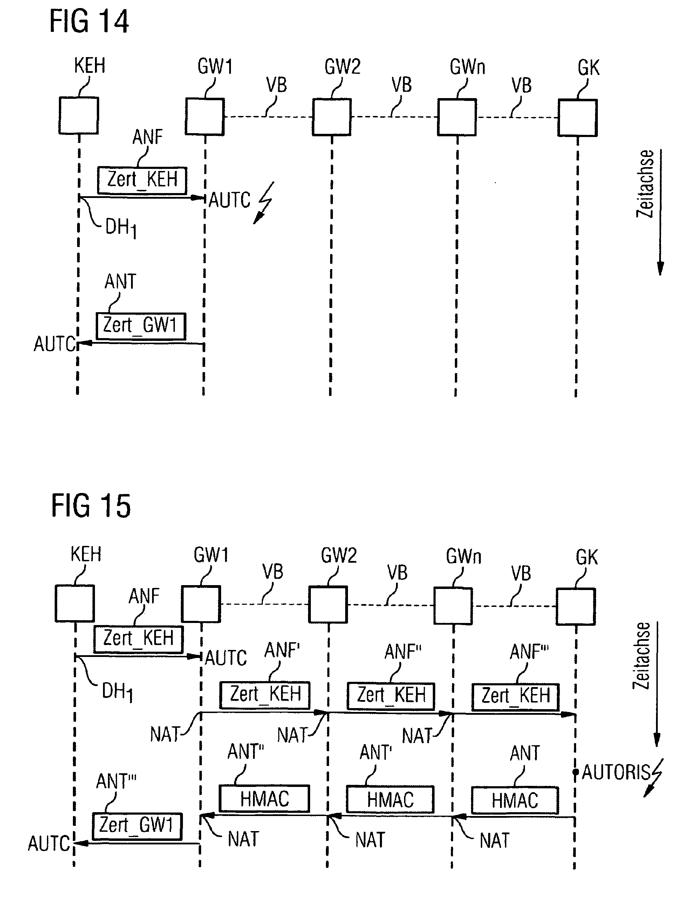

Die Figuren 14 und 15 zeigen fehlgeschlagene Anmeldeversuche der Kommunikationseinheit KEH in dem Kommunikationssystem. Da die Überprüfung der Anfrage-Nachricht auf Authentizität ausschließlich durch den Netzwerkverbindungs-Rechner GW1 durchgeführt wird, wird im Falle einer negativen Überprüfung unmittelbar eine Antwort-Nachricht ANT an die Kommunikationseinheit KEH zurück gesandt. Eine Modifikation und Übermittlung der Anfrage-Nachricht ANF an eine der anderen Netzwerkverbindungs-Rechner GW2,..., GWn erfolgt nicht (Figur 14).

Gemäß dem Ausführungsbeispiel der Figur 15 ist die Überprüfung auf Authentizität positiv verlaufen, so dass die Anfrage-Nachricht ANF unter Modifikation durch jeden Netzwerkverbindungs-Rechner GW1,... GWn an den Verbindungssteuerungs-Rechner GK übertragen wird. Für den Fall, dass die Überprüfung auf Autorisierung fehlgeschlagen ist, wird eine Antwort-Nachricht generiert, die mittels des HMAC-Verfahrens an den Netzwerkverbindungs-Rechner GW1 übertragen wird. Da eine Anmeldung durch den Verbindungssteuerungs-Rechner GK verweigert wird, wird der nochmals modifizierten Antwort-Nachricht ANT''' kein Diffie-Hellman-Halfset beigefügt. Somit ist auch der Aufbau einer Vertrauensbeziehung zwischen der Kommunikationseinheit und dem Netzwerkverbindungs-Rechner GW1 nicht möglich.

In den beschriebenen Ausführungsbeispielen ist der Verbindungssteuerungs-Rechner durch einen Rechner gebildet. Alternativ kann der Verbindungssteuerungs-Rechner auch auf mehrere Rechner aufgeteilt sein.

## Patentansprüche

1. Ein H.323-basiertes Kommunikationssystem, das als Kommunikationselemente (KE) einen Gatekeeper (GK), einen mit dem Gatekeeper (GK) gekoppelten Gateway (GW), zumindest eine mit dem Gateway (GW) gekoppelte Kommunikationseinheit (KEH) und eine Datenbank (DB), die anwenderspezifische Informationen über die Kommunikationseinheit (KEH) enthält, aufweist, wobei das Kommunikationssystem derart angepasst ist, dass zum Anmelden einer Kommunikationsbeziehung der Kommunikationseinheit (KEH) in dem Kommunikationssystem (KS) die Kommunikationseinheit (KEH) über den Gateway (GW) an den Gatekeeper (GK) eine Anfrage-Nachricht (ANF) schickt, die der Gateway (GW) auf Authentizität und der Gatekeeper (GK) auf Autorisierung überprüfen, und lediglich der Gatekeeper (GK) und nicht das Gateway (GW) mit der Datenbank (DB) verbunden ist.

2. Kommunikationssystem nach Anspruch 1,
**dadurch gekennzeichnet, dass**
die Kommunikationseinheit (KEH) und der Gatekeeper (GK) unterschiedlichen Kommunikationsnetzen zugeordnet sind.

3. Kommunikationssystem nach Anspruch 1 oder 2,
**dadurch gekennzeichnet, dass**
die Kommunikationseinheit (KEH) einen Rechner oder einen weiteren Gateway (GW) darstellt, welcher mit zumindest einer weiteren Kommunikationseinheit (KEH) gekoppelt ist.

4. Kommunikationssystem nach einem der vorhergehenden Ansprüche,
**dadurch gekennzeichnet, dass**
jeweils zwei der Kommunikationselemente (KE) durch eine Vertrauensbeziehung miteinander verbunden sind.

5. Kommunikationssystem nach Anspruch 4,
**dadurch gekennzeichnet, dass** die Vertrauensbeziehung durch ein Passwort oder ein gemäß dem Diffie-Hellman-Verfahren gebildetes Geheimnis dargestellt ist.

6. Kommunikationssystem nach Anspruch 5,
**dadurch gekennzeichnet, dass**
jede Vertrauensbeziehung durch ein Passwort oder ein gemäß dem Diffie-Hellman-Verfahren gebildetes Geheimnis dargestellt ist.

7. Kommunikationssystem nach einem der Ansprüche 4 bis 6,
**dadurch gekennzeichnet, dass**
eine Vertrauensbeziehung nur nach vorheriger positiver Authentifizierung und positiver Autorisierung besteht.

8. Kommunikationssystem nach einem der vorangehenden Ansprüche,
**dadurch gekennzeichnet, dass**
jedes Kommunikationselement (KE) ein persönliches Zertifikat und einen privaten Schlüssel aufweist.

9. Kommunikationssystem nach Anspruch einem der vorangehenden Ansprüche,
**dadurch gekennzeichnet, dass**
jedes Kommunikationselement (KE) zumindest ein Root-Zertifikat, mit dem das persönliche Zertifikat der verbundenen Kommunikationselemente (KE) signiert ist, aufweist.

10. Kommunikationssystem nach einem der vorhergehenden Ansprüche,
**dadurch gekennzeichnet, dass**
jedes Kommunikationselement nur die Adressen der mit ihm verbundenen Kommunikationselemente kennt.

11. Kommunikationssystem nach einem der vorhergehenden Ansprüche,
**dadurch gekennzeichnet, dass**
lediglich der Gatekeeper (GK) mit einer Datenbank verbunden ist, in welcher sich anwenderbezogene Daten zur Überprüfung der Autorisierung befinden.

12. Verfahren zum Anmelden einer Kommunikationsbeziehung in einem H.323-basierten Kommunikationssystem, wobei das Kommunikationssystem als Kommunikationselemente (KE) einen Gatekeeper (GK), einen mit dem Gatekeeper (GK) gekoppelten Gateway (GW), zumindest eine mit dem Gateway (GW) gekoppelte Kommunikationseinheit (KEH) und eine Datenbank (DB), die anwenderspezifische Informationen über die Kommunikationseinheit (KEH) enthält, wobei lediglich der Gatekeeper (GK) und nicht das Gateway (GW) mit der Datenbank (DB) verbunden ist, umfasst, mit den Schritten:
Übertragen einer Anfrage-Nachricht (ANF) von der Kommunikationseinheit (KEH) an den Gatekeeper (GK) über den Gateway (GW);
Durchführen einer Authentifikation der Anfrage-Nachricht durch den Gateway (GW);
Weiterleiten der Anfrage-Nachricht an den Gatekeeper, falls die Authentifikation positiv ausfiel;
Überprüfung der Autorisierung der Anfrage-Nachricht durch den Gatekeeper (GK); und
Übertragen einer Antwort-Nachricht (ANT) an die die Anfrage-Nachricht sendende Kommunikationseinheit (KEH).

13. Verfahren nach Anspruch 12,
**dadurch gekennzeichnet, dass**
das Weiterleiten der Anfrage-Nachricht (ANF) unter Verwendung einer Vertrauensbeziehung zwischen dem Gateway (GW) und dem Gatekeeper (GK) erfolgt.

14. Verfahren nach einem der Ansprüche 12 bis 13,
**dadurch gekennzeichnet, dass**
bei einer Mehrzahl an seriell, zwischen der Kommunikationseinheit (KEH) und dem Gatekeeper (GK), gelegenen Gateways (GW) eine Authentifikation der Anfrage-Nachricht in dem mit der Kommunikationseinheit (KEH) verbundenen Gateway (GW) und die Autorisierung erst in dem Gatekeeper (GK) erfolgt.

15. Verfahren nach Anspruch 14,
**dadurch gekennzeichnet, dass**
das Anmelden der Mehrzahl an Gateways (GW1,...,GWn) der Reihe nach erfolgt, beginnend mit dem mit dem Gatekeeper (GK) verbundenen Gateway (GWn).

16. Verfahren nach einem der Ansprüche 12 bis 15,
**dadurch gekennzeichnet, dass**
nach positiver Authentifizierung und Autorisierung als weiterer Schritt der Aufbau einer Vertrauensbeziehung zwischen der Kommunikationseinheit (KEH) und dem mit dieser verbundenen Gateway (GW) erfolgt.

17. Verfahren nach einem der Ansprüche 12 bis 16,
**dadurch gekennzeichnet, dass**
die Antwort-Nachricht (ANT) bei der Übertragung von dem Gatekeeper (GK) an die Kommunikationseinheit (KEH) durch die Kommunikationseinheit (KEH) auf Authentizität geprüft wird.

18. Verfahren nach einem der Ansprüche 12 bis 17,
**dadurch gekennzeichnet, dass**
die Anfrage-Nachricht bei der Übertragung von der Kommunikationseinheit (KEH) an den Gatekeeper (GK) durch jeden Gateway (GW) zumindest teilweise modifiziert wird.

19. Verfahren nach einem der Ansprüche 12 bis 18,
**dadurch gekennzeichnet, dass**
lediglich der Gatekeeper (GK) mit einer Datenbank verbunden wird, in welcher sich anwenderbezogene Daten zur Überprüfung der Autorisierung befinden.

## Claims

1. H.323-based communication system which, as its communication elements (KE), features a gatekeeper (GK), a gateway (GW) connected to the gatekeeper (GK) at least one communication unit (KEH) connected to the gateway (GW), and a database (DB) containing user-specific information about the communication unit (KEH), wherein the communication system is adapted so that, to register a communication link of the communication unit (KEH) in the communication system (KS), the communication unit (KEH) sends a request message (ANF) via the gateway (GW) to the gatekeeper (GK), said request message checking the gateway (GW) for authenticity and the gatekeeper (GK) for authorization and only the gatekeeper (GK) and not the gateway (GW) being connected to the database (DB).

2. Communication system in accordance with claim 1,
**characterised in that**
the communication unit (KEH) and the gatekeeper (GK) are assigned to different communication networks.

3. Communication system in accordance with claim 1 or 2,
**characterised in that**
the communication unit (KEH) represents a computer or a further gateway (GW) which is coupled with at least one further communication unit (KEH).

4. Communication system in accordance with one of the previous claims,
**characterised in that**
two communication elements (KE) in each case are linked together by a trust relationship.

5. Communication system in accordance with claim 4,
**characterised in that** the trust relationship is represented by a password or a secret formed by the Diffie-Hellman method.

6. Communication system in accordance with claim 5,
**characterised in that**
each trust relationship is represented by a password or a secret formed according to the Diffie-Hellman method.

7. Communication system in accordance with one of the claims 4 to 6, **characterized in that**
a trust relationship only exists after a previous positive authentication and positive authorization.

8. Communication system in accordance with one of the preceding claims, **characterized in that**
each communication element (KE) has a personal certificate and a private key.

9. Communication system in accordance with one of the preceding claims, **characterized in that**
each communication element (KE) has at least one root certificate with which the personal certificate of the associated communication element (KE) is signed.

10. Communication system in accordance with one of the previous claims,
**characterised in that**
each communication element only knows the address of the communication element connected to it.

11. Communication system in accordance with one of the preceding claims,
**characterised in that**
only the gatekeeper (GK) is connected to a database, in which user-related data is located for checking authorisation.

12. Method for registering a communication link in an H.323-based communication system, wherein the communication system, as its communication elements (KE), features a gatekeeper (GK), a gateway (GW) connected to the gatekeeper (GK), at least one communication unit (KEH) connected to the gateway (GW) and a database (DB), which contains user-specific information about the communication unit (KEH), wherein only the gatekeeper (GK) and not the gateway (GW) is connected to the database (DB), having the steps :
Transmission of a request message (ANF) from the communication unit (KEH) to the gatekeeper (GK) via the gateway (GW);
Authentication of the request message by the gateway (GW);
Forwarding of the request message to the gatekeeper if the outcome of the authentication is positive;
Checking of the authorization data of the request message by the gatekeeper (GK) ; and
Transmission of a response message (ANT) to the communication unit (KEH) sending the request message.

13. Method in accordance with claim 12,
**characterised in that**
the request message (ANF) is forwarded between the gateway (GW) and the gatekeeper (GK) using a trust relationship.

14. Method in accordance with one of the Claims 12 to 13,
**characterized in that**
for a plurality of gateways connected serially between the communication unit (KEH) and the gatekeeper (GK) there is authentication of the request message in the gateway (GW) connected to the communication unit (KEH) and authorization only in the gatekeeper (GK).

15. Method according to Claim 14,
**characterised in that**
the plurality of gateways (GW1,...,GWn) are registered in turn, beginning with the gateway (GWn) connected to the gatekeeper (GK).

16. Method in accordance with one of the Claims 12 to 15,
**characterized in that**
as a further step after positive authentication and authorization a trust relationship is established between the communication unit (KEH) and the gateway (GW) connected to it.

17. Method in accordance with one of the Claims 12 to 16,
**characterized in that**
the response message (ANT) is checked for authenticity by the communication unit (KEH) on transmission from the gatekeeper (GK) to the communication unit (KEH).

18. Method in accordance with one of the Claims 12 to 17,
**characterized in that**
the request message is modified at least in part by each gateway (GW) on transmission from the communication unit (KEH) to the gatekeeper (GK).

19. Method in accordance with one of claims 12 to 18,
**characterised in that**
only the gatekeeper (GK) is connected to a database, in which user-related data is located for checking the authorisation.

## Revendications

1. Système de communication basé sur H.323, qui comporte, en tant qu'éléments de communication (KE), un gardien (GK), une passerelle (GW) couplée au gardien (GK), au moins une unité de communication (KEH) couplée à la passerelle (GW) et une base de données (DB) qui contient des informations sur l'unité de communication (KEH) spécifiques à l'utilisateur, le système de communication étant adapté de sorte que, pour demander une relation de communication de l'unité de communication (KEH) dans le système de communication (KS), l'unité de communication (KEH) envoie au gardien (GK), via la passerelle (GW), un message de requête (ANF) que la passerelle (GW) vérifie quant à son authenticité et le gardien (GK), quant à l'autorisation, et que seul le gardien (GK), non cependant la passerelle (GW), est relié à la base de données (DB).

2. Système de communication selon la revendication 1, **caractérisé en ce que** l'unité de communication (KEH) et le gardien (GK) sont associés à des réseaux de communication différents.

3. Système de communication selon la revendication 1 ou 2, **caractérisé en ce que** l'unité de communication (KEH) représente un ordinateur ou une autre passerelle (GW) qui sont couplés à au moins une autre unité de communication (KEH).

4. Système de communication selon l'une des revendications précédentes, **caractérisé en ce que** respectivement deux des éléments de communication (KE) sont reliés entre eux par une relation de confiance.

5. Système de communication selon la revendication 4, **caractérisé en ce que** la relation de confiance est représentée par un mot de passe ou un secret formé conformément au procédé de Diffie-Hellman.

6. Système de communication selon la revendication 5, **caractérisé en ce que** chaque relation de confiance est représentée par un mot de passe ou par un secret formé conformément au procédé de Diffie-Hellman.

7. Système de communication selon l'une des revendications 4 à 6, **caractérisé en ce qu'**une relation de confiance n'existe qu'après authentification préalable positive et autorisation préalable positive.

8. Système de communication selon l'une des revendications précédentes, **caractérisé en ce que** chaque élément de communication (KE) comporte un certificat personnel et une clé privée.

9. Système de communication selon l'une des revendications précédentes, **caractérisé en ce que** chaque élément de communication (KE) comporte au moins un certificat racine avec lequel est signé le certificat personnel des éléments de communication reliés (KE).

10. Système de communication selon l'une des revendications précédentes, **caractérisé en ce que** chaque élément de communication connaît uniquement les adresses des éléments de communication qui y sont reliés.

11. Système de communication selon l'une des revendications précédentes, **caractérisé en ce que** seul le gardien (GK) est relié à une base de données dans laquelle se trouvent des données relatives à l'utilisateur pour vérifier l'autorisation.

12. Procédé pour demander une relation de communication dans un système de communication basé sur H.323, le système de communication contenant, en tant qu'éléments de communication (KE), un gardien (GK), une passerelle (GW) couplée au gardien (GK), au moins une unité de communication (KEH) couplée à la passerelle (GW) et une base de données (DB) qui contient des informations sur l'unité de communication (KEH) spécifiques à l'utilisateur, seul le gardien (GK), non cependant la passerelle (GW), étant relié à la base de données (DB), comportant les étapes suivantes :
- transmission d'un message de requête (ANF) de l'unité de communication (KEH) au portier (GK) via la passerelle (GW) ;
- exécution d'une authentification du message de requête par la passerelle (GW) ;
- retransmission du message de requête au portier si l'authentification s'est avérée positive ;
- vérification de l'autorisation du message de requête par le portier (GK) et
- transmission d'un message de réponse (ANT) à l'unité de communication (KEH) qui émet le message de requête.

13. Procédé selon la revendication 12, **caractérisé en ce que** la retransmission du message de requête (ANF) se fait avec utilisation d'une relation de confiance entre la passerelle (GW) et le portier (GK).

14. Procédé selon l'une des revendications 12 à 13, **caractérisé en ce que**, pour une pluralité des passerelles (GW) qui sont situées en série entre l'unité de communication (KEH) et le portier (GK), une authentification du message de requête est effectuée dans la passerelle (GW) reliée à l'unité de communication (KEH) et l'autorisation ne se fait que dans le portier (GK).

15. Procédé selon la revendication 14, **caractérisé en ce que** la connexion de la pluralité de passerelles (GW1, ... GWn) se fait dans l'ordre en commençant par la passerelle (GWn) reliée au portier (GK).

16. Procédé selon l'une des revendications 12 à 15, **caractérisé en ce qu'**est effectué, en tant qu'autre étape après authentification et autorisation positives, l'établissement d'une relation de confiance entre l'unité de communication (KEH) et la passerelle (GW) qui y est reliée.

17. Procédé selon l'une des revendications 12 à 16, **caractérisé en ce que**, lors de la transmission du portier (GK) à l'unité de communication (KEH), le message de réponse (ANT) est contrôlé par l'unité de communication (KEH) quant à son authenticité.

18. Procédé selon l'une des revendications 12 à 17, **caractérisé en ce que**, lors de la transmission de l'unité de communication (KEH) au portier (GK), le message de réponse est modifié au moins en partie par chaque passerelle (GW).

19. Procédé selon l'une des revendications 12 à 18, **caractérisé en ce que** seul le portier (GK) est relié à une base de données dans laquelle se trouvent des données relatives à l'utilisateur pour la vérification de l'autorisation.
